# EUROPEAN PATENT SPECIFICATION

(11) **EP 1 382 526 B1**
(45) Date of publication and mention of the grant of the patent: **17.05.2006**
(21) Application number: 03077163.8
(22) Date of filing: 10.07.2003
(51) Int. Cl.: B64C 25/32, B64C 21/04

(54) **Aircraft noise reduction device**
Geräuschverminderungsvorrichtung für Flugzeuge
Appareil de réduction du bruit pour un aéronef

(30) Priority: 15.07.2002 NL 1021077
(43) Date of publication of application: 21.01.2004
(73) Proprietor: Stork SP Aerospace B.V., 5661 NB Geldrop (NL)
(72) Inventor: Wickerhoff, Jasper Jan, 3069 AP Rotterdam (NL); Sijpkes, Tjaard, 5663 RK Geldrop (NL)
(74) Representative: Dorna, Peter

(56) References cited:
- WO-A-01/04003
- DE-A- 4 334 164
- FR-A- 1 323 294
- US-A- 4 834 320

## Description

The invention relates to an aeroplane provided with noise-reducing means for reducing the noise level that is produced during a flight, in particular during the landing stage of the aeroplane, due to the presence of the landing gear of the aeroplane, said noise-reducing means comprising deflection means for deflecting an air flow away from the landing gear or at least from components thereof.

As modern jet engines become quieter, a relative increase can be observed as regards the extent to which the landing gear contributes to the overall noise level of an aeroplane. For that reason, and also because of the increasingly stringent environmental standards, there is a growing need to reduce the contribution of the landing gear to the overall noise production in a relative sense or at least in an absolute sense.

An aeroplane according to the introduction is known from International patent application WO 01/04003 A1. Said document discloses a landing gear of an aeroplane that can be deployed and retracted, in which screening elements are attached to the front side of various components of the landing gear that might lead to a higher than average noise production, so that the air flow that passes the landing gear during the take-off and landing stages of the aeroplane (the landing gear is retracted during the period between said take-off and landing stages) is locally deflected away from the respective component of the landing gear so as to prevent noise being produced.

One drawback of the use of such screening elements is the fact that the spatial range of influence of the screening elements being used is mainly limited to the area straight behind the screening elements. As it is desirable, therefore, to cover a larger area behind the screening element, seen in front view, it is necessary to use larger screening elements. In the first place, the flow resistance of the screening elements will increase as the dimensions thereof increase, causing the energy consumption and the noise production to increase as well, due to the fact that more engine power is required. In the second place it is noted that it will become more problematic to accommodate the screening elements as the screening elements become larger, especially in the retracted position of the landing gear, since the screening elements disclosed in WO 01/04003 A1 are attached to the landing gear. Another drawback of the screening elements disclosed therein is the fact that the screening elements have a harmful effect on the integrity of the landing gear, not only because of the necessary attachment of the screening elements to the landing gear, but also because of the very presence thereof. All this may have an adverse effect on the certification and the warranty for the landing gear. Said harmful effect on the integrity of the landing gear may manifest itself inter alia in that the screening elements may cause the landing gear to jam both upon being retracted and upon being deployed, for example as a consequence of the screening element having been damaged by a collision with a bird. In addition, the prior art screening elements make it more difficult to visually inspect the landing gear, so that inter alia the daily routine inspections are made more difficult. The screening elements furthermore have an negative effect on the physical accessibility of the various landing gear components, such as the so-called tow bar used for towing the aeroplane, and the jacking points. Furthermore it is noted that the screening elements may cause undesirable and unexpected air flow accelerations at undesirable places. This in turn may lead to a higher noise level, especially in view of the fact that the noise level is proportional to the sixth power of the velocity of the air.

The object of the invention is to provide a solution for the limitations and further drawbacks of the prior art, whether or not in preferred embodiments of the invention. More specifically, it is an object of the invention to screen a relatively large area of the landing gear from the air that is present in the path of the landing gear by taking relatively small technical measures. In order to accomplish that objective, the aeroplane is according to the invention characterized in that the deflection means comprise blowing means comprising a blowing element having at least one blowing nozzle for creating an air screen at the front side of the landing gear, or at least of components thereof, from said at least one blowing nozzle. The use of said blowing means provided with said blowing element having said at least one blowing nozzle makes it possible to create an air screen from said at least one blowing nozzle by blowing out air at a sufficiently high velocity and in a sufficient volume, which air screen forms a screen for the landing gear, or at least for a component thereof.

The dimensions of the blowing element and the blowing nozzle may be relatively small, whereas the screened area behind the air flow is comparatively large. Because of the relatively small volume of the blowing element comprising the blowing nozzle, the influence of the blowing elements on the aeroplane drag and thus on the energy consumption is limited if not zero, whilst in addition only a limited amount of space is taken up by the blowing nozzle. This in turn leads to a large number of advantages resulting therefrom, among which especially the fact that, thanks to the invention, the integrity of a landing gear is not harmed, or at least not necessarily so, which implies that the use of the invention need not have a negative effect on the safety of the aeroplane. Both the visual and the physical accessibility of the various components of the landing gear can be maintained. Due to the use of an air screen instead of a screening body consisting of solid material, a smooth transition between the deflected air and the air screen is created, so that the above-mentioned provisions will not lead to significantly higher noise levels. Since the designers are not bound by all kinds of highly restrictive preconditions connected with the considerable amount of space that screening bodies take up, the designers will have a very great freedom in designing the landing gear fitted with a blowing element provided with blowing nozzles, for example as regards the number of blowing nozzles, the direction in which the air is blown out and the area that is to be screened by the blowing nozzles. This makes it possible to create a complex yet efficient assembly of blowing nozzles for screening those components of the landing gear that produce an excessive amount of noise. Such components include components such as the steering mechanism, a connecting mechanism, also indicated by the technical term articulation link, the tow bar, longitudinal and/or lateral struts, small-scale components such as hydraulic components, wiring, bolt ends, springs and the like and narrow passages where the air flow tends to accelerate.

The invention is suitable for use both with a nose landing gear and with a main landing gear of an aeroplane, which landing gears may e.g. comprise 1, 2, 4 or 6 wheels.

With regard to the screening of a brake system associated with a landing gear, which system in itself may contribute significantly to the noise level that is produced, it is noted that it is conceivable in connection with the necessary air cooling of the brake system to allow the air to pass freely at that location or to screen the brake system with an air screen on the one hand and nevertheless realise the required air cooling by blowing air onto the brake system from a position that is most advantageous from the viewpoint of noise-reduction.

A very advantageous aspect of the invention is obtained if said at least one blowing nozzle is elongated in shape. The use of an elongated blowing nozzle makes it possible in a very suitable manner to create an air screen by means of which a passing air flow can be deflected and components positioned behind the air screen can thus be screened from the passing air flow, so that said components will not contribute to the noise production, or only to a reduced extent. In principle the invention makes it possible, in particular when using air screens, to screen not only components of the landing gear from a passing air flow but even the landing gear in its entirety.

A very advantageous aspect of the invention is characterized in that said at least one blowing nozzle is horizontally oriented, facing in downward direction. Thus an initially substantially vertical air screen can be created, which deflects to the rear along with the passing air flow as the air screen becomes further removed from the blowing nozzle. An air screen thus formed can be used in a very advantageous manner, for example for screening the wheels of the landing gear, an axle for the wheels or other components of the landing gears that exhibit a curvature having a horizontally oriented central axis extending perpendicularly to the direction of flight.

In the case of a component of the landing gear having a substantially vertical orientation, it may be advantageous if said at least one blowing nozzle is vertically oriented, facing in lateral direction. Thus it is possible to create an air screen that initially extends in lateral direction, which air screen deflects to the rear. along with the passing air flow, around the component of the landing gear that is to be screened.

In particular in the case of components of the landing gear that exhibit a curvature about a vertically oriented central axis, it may be very advantageous if the blowing element comprises two blowing nozzles being vertically oriented in mirror symmetry. Thus it is possible to create an air screen, e.g. having a C-shaped, U-shaped or V-shaped horizontal section, which embraces the respective components of the landing gear or the landing gear as a whole, such as a nose landing gear, as it were.

Because of the limited volume of the blowing element it is very advantageous if, in the case of retractable landing gears, the blowing element can be moved into a wheel bay of the aeroplane together with the landing gear. Thus said at least one blowing nozzle is prevented from unnecessarily causing drag, whilst in addition the possible presence of a stationary blowing nozzle on the outside of the fuselage of the aeroplane will not interfere with the deployment and retraction of the landing gear. Alternatively, it is also quite conceivable within the framework of the invention for the blowing elements to be movable between an inoperative position and an operative position, for example by means of a telescoping mechanism, in which case the blowing element will be positioned within a space, such as the wheel bay, in the aeroplane in the inoperative position and partially outside the aeroplane, for example, in the operative position.

When a horizontally oriented, downwardly facing air nozzle is used, the blowing nozzle is preferably attached to the underside of the fuselage of the aeroplane. Thus the air screen being created by said blowing nozzle can screen the landing gear in its entirety. In addition, the blowing nozzle will cause relatively little drag at that position.

Said drag can be further reduced or even be eliminated altogether if the blowing nozzle is mounted in the wall of the fuselage at the bottom side of the aeroplane. The blowing nozzle will no longer form a projecting part in that case, but it will be accommodated as a whole within the contours of the fuselage of the aeroplane.

Other suitable positions for a downwardly facing blowing nozzle may be the front side of a wing, the bottom side of a wing or the bottom side of an engine. Alternatively it is possible, of course, to integrate the downwardly facing blowing nozzle in the respective wall of the wing or the engine, as it were. Such an arrangement has advantages in particular as regards the reduction of the noise level produced by the main landing gear.

According to a very advantageous preferred aspect of the invention, the blowing means comprise a compressor that is connected to the blowing element. The amount of air exiting the blowing nozzle and the velocity thereof can be precisely controlled by means of such a compressor. It is possible to use the compressor portion of the jet engine of the aeroplane for this purpose, or to use the so-called bypass air from the jet engine.

Alternatively, or in combination therewith, the blowing means may also comprise deflection means for deflecting air in the path of the landing gear. Thus the velocity of the aeroplane is used, as it were, to create an air screen for the landing gear so as to reduce the noise level caused by the presence of the landing gear.

The invention also relates to a landing gear for use with an aeroplane according to the invention as described above. Such a landing gear is characterized by blowing means comprising a blowing element having at least one blowing nozzle for creating an air screen at the front side of the landing gear, or at least of components thereof, from said at least one blowing nozzle.

The invention furthermore relates to blowing means for use with an aeroplane according to the invention as described above, which blowing means comprise a blowing element having at least one blowing nozzle for creating an air screen at the front side of the landing gear, or at least components thereof, from said at least one blowing nozzle.

The advantages of the use of such a landing gear or of such blowing means have already been explained in detail in the foregoing.

The invention will be explained in more detail hereinafter by means of a description of a number of preferred embodiments of the invention, in which reference is made to the following Figures, which are perspective views (with the exception of Figure 12a), with Figures 1-3 being schematic views.
Figure 1 shows a first preferred aspect according to the invention;
Figure 2 shows a second preferred aspect;
Figure 3 shows a third preferred aspect;
Figure 4 shows a fourth preferred aspect;
Figure 5 shows the encircled area IV in Figure 4;
Figure 6 shows a part of Figure 4 in greater detail;
Figure 7 shows the effected deflection in the area that is shown in Figure 6;
Figure 8 shows a fifth preferred aspect;
Figure 9 shows a part of Figure 8 in greater detail;
Figure 10 shows a sixth preferred aspect;
Figure 11 shows a part of Figure 10 in greater detail from another perspective; and
Figures 12a and 12b show a seventh preferred aspect in vertical sectional view and in perspective view, respectively.

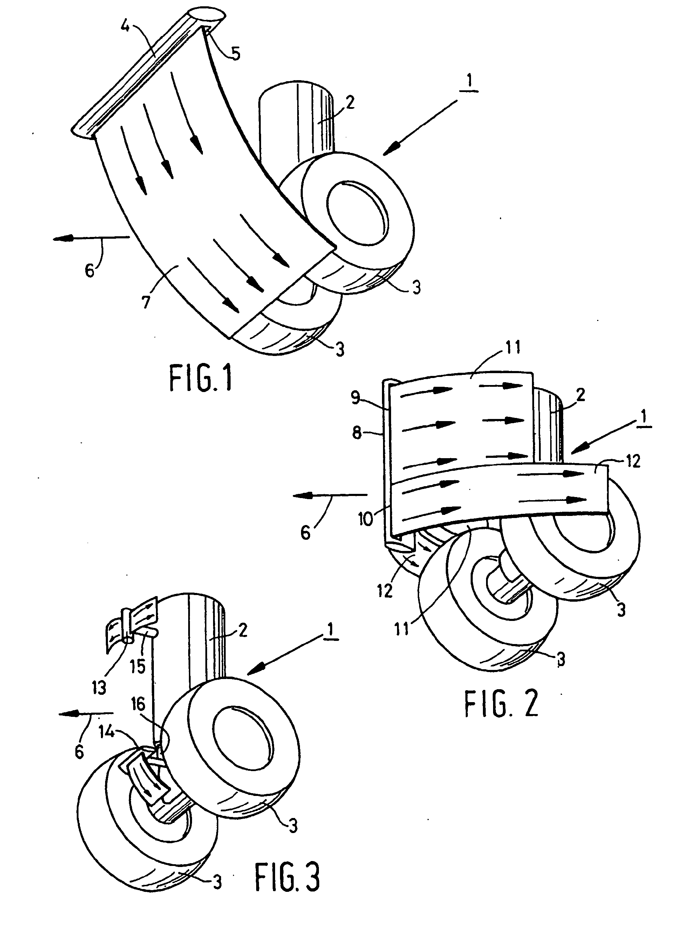

Figures 1, 2 and 3 show the same nose landing gear 1. The landing gear 1 is essentially built up of a frame member 2 and a pair of wheels 3, which are rotatable journalled about a horizontal axis with respect to the frame member 2. The frame member 2 is substantially in the shape of an inverted T, with the horizontal member of the T-shape extending between the two wheels of the pair of wheels 3. The landing gear 1 forms part of an aeroplane (not shown), and it can be deployed in a manner which is known to those skilled in the art for moving the aeroplane supported by the wheels of the pair of wheels 3 over a supporting surface, and it can be retracted into a wheel bay to prevent landing gear drag during flight of the aeroplane.

In the aspect of the invention that is shown in Figure 1, the landing gear 1 is combined with an elongated pressure chamber 4, which is provided with a blowing slot 5 at its bottom side. The pressure chamber 4 provided with the blowing slot 5 is directly mounted on the bottom side of the fuselage of the aeroplane (not shown). The pressure chamber 4, and thus the blowing slot 5, extends in a direction perpendicular to the direction of movement of the aeroplane, which direction is indicated by the arrow 6. The pressure chamber 4 is connected to pressure means (not shown), such as a compressor for increasing the air pressure within the pressure chamber 4. Thus an air screen 7 is created which, starting from the blowing slot, extends along the front side of the landing gear 1 and which deflects past the bottom side of the pair of wheels 3 under the influence of the movement of the aeroplane in the atmosphere. Thus the entire landing gear 1 is screened from the passing air flow by the air screen 7, because said passing air flow will be deflected away from the bottom side of the landing gear 1 as a result of the presence of the air screen 7.

In Figure 2 the landing gear 1 is combined with another pressure chamber 8, which is vertically oriented and which is centrally positioned at the front side of the vertical member of the T-shaped frame member 2. Two co-axial blowing slots 9, 10 are formed in respective sides of the pressure chamber 8. An air screen 11, 12 is created on either side of the pressure chamber 8 for each of the blowing slots 9, 10 by suitably increasing the pressure within the pressure chamber 8. The configuration and orientation of the pressure chamber 8 and the blowing slots 9,10 are such that the two upper air screens 11 are substantially V-shaped, seen in horizontal section. The same obtains with regard to the horizontal section of the two lower air screens 12. The blowing direction of the blowing slots 9, 10 is such, however, that the apex angle of the V-shape for the upper air screens 11 is smaller than the apex angle of the V-shape of the air screens 12. Thus the air screens 11 can narrowly enclose the column of the frame member 2, whilst the air screens 12 enclose the horizontal part of the T-shape of the frame member 2 with the pair of wheels 3. Figure 2 shows the situation in which the air screens 12 only enclose the upper part of the pair of wheels 3. It will be understood that it is also possible to have air screens 12 enclose the entire wheel pair 3 by extending the pressure chamber 8 and the blowing slot 10 in downward direction. Especially in those cases where the landing gear 1 is a retractable landing gear, it will be advantageous if the pressure chamber 8 can be retracted somehow as well. In this connection it may be considered to move the pressure chamber 8 telescopically upwards or, for example, to swing away the pressure chamber 8 in forward or rearward direction about a horizontal axis extending perpendicularly to the direction of flight 6 at the upper side of the pressure chamber 8.

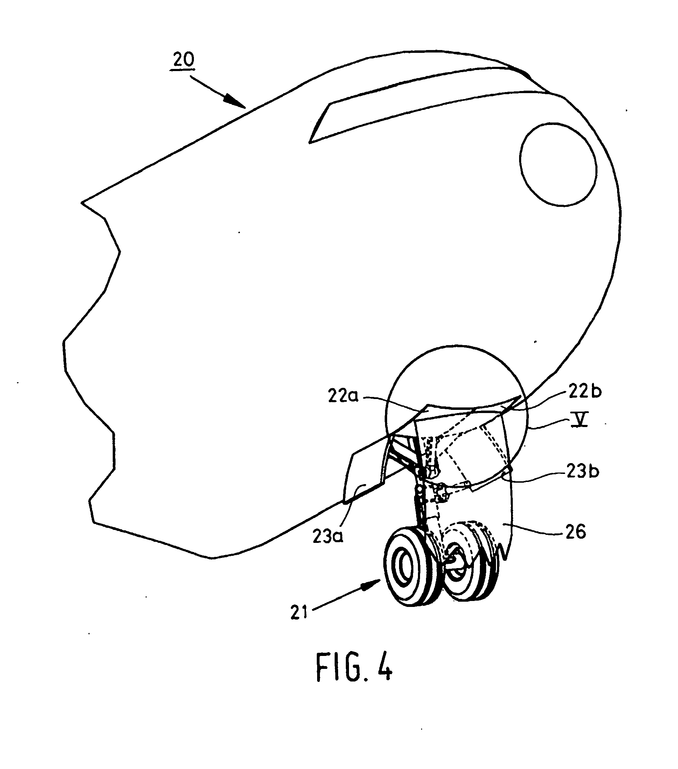

Figure 3 shows the landing gear 1 in combination with pressure chambers 13, 14 that are locally provided at the front side of parts (not designated) of the frame member 2 which, in the absence of a screen, would add to the noise production to a greater than average extent. Thus it is specifically the aforesaid parts that can be effectively screened. The pressure chambers 13, 14 are connected to the vertical member and the horizontal member of the frame member 2 via tubes 15 and 16, respectively. The hollow space within the tube 15, 16 is utilised for accommodating pressure lines, which are connected to pressure chambers 13, 14 for the purpose of increasing the pressure therein. As Figure 3 clearly shows, the pressure chamber 13 is a vertical, dual outlet pressure chamber, whilst the pressure chamber 14 is a horizontal, single outlet pressure chamber.

Figure 4 shows the nose side of an aeroplane 20 with a nose landing gear 21. The landing gear 21 is shown in the deployed position thereof in Figure 4. In the retracted position, the landing gear 21 is fully accommodated within a wheel bay in the fuselage of the aeroplane. The bottom side of said space can be closed by means of the front wheel bay doors 22a, 22b and the rear wheel bay doors 23a and 23b. When the landing gear 21 is to be moved from a retracted position to a deployed position, all the wheel bay doors 22a, 22b, 23a, 23b will open, whilst the front wheel bay doors 22a, 22b will close again once the landing gear 21 is in its deployed position.

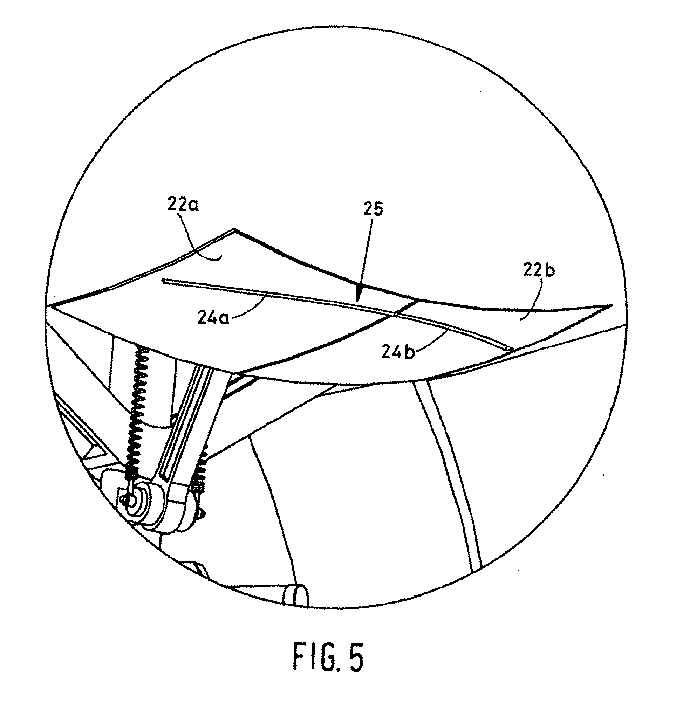

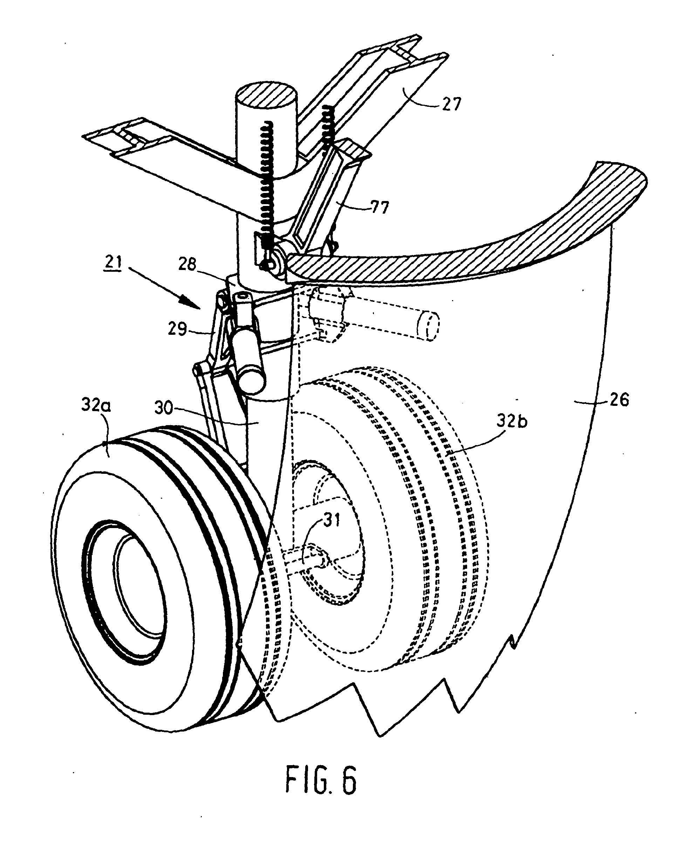

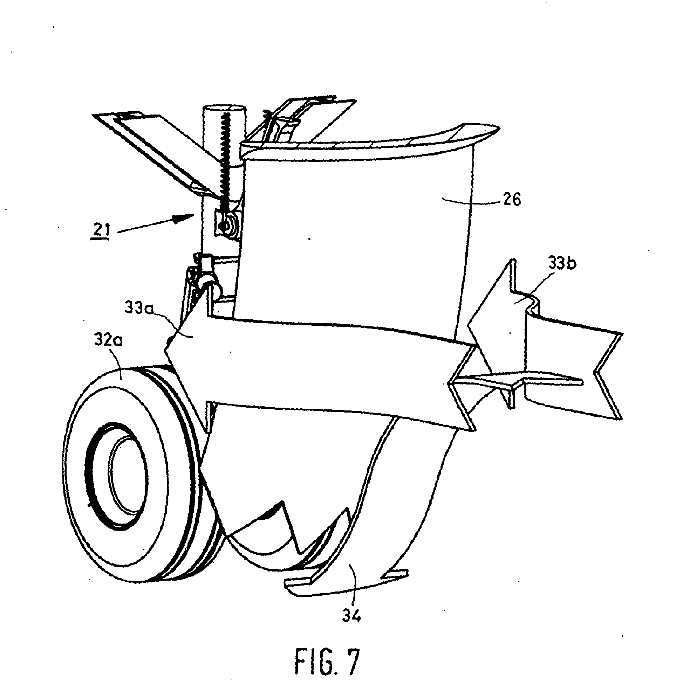

As is also clearly shown in Figure 5, contiguous slots 24a, 24b are formed in the front wheel bay doors 22a, 22b, respectively, which slots jointly form a slightly curved blowing slot 25. Said blowing slot 25 is positioned at the front side of the landing gear 21, seen in the direction of flight. The blowing slot 25 is connected to a compressor inside the fuselage of the aeroplane 20, thus making it possible to create an air screen 26 from the blowing slot 25 along the front of the landing gear 21 (see also Figures 6 and 7).

Creating the blowing slot 25 in the front wheel bay doors 22a, 22b makes it possible to adapt an existing aeroplane for the use of the present invention by simply substituting conventional front wheel bay doors for wheel bay doors 22a and 22b. It is not necessary, therefore, to make a separate opening in the fuselage, for example, which would be highly undesirable for reasons connected with certification and warranty.

As is shown in particular in Figure 6, the landing gear 21 comprises a so-called drag brace 77, a so-called main fitting 27, which in particular may add to the noise level on account of the air that flows between the two legs thereof, steering gear 28, a torque link 29, an inner cylinder 30, a so-called tow bar 31 and two wheels 32a, 32b. All these components of the landing gear 21 are known to those skilled in the art, and consequently they do not require any further explanation within the framework of the present invention. It is important, however, to note that it is inter alia the aforesaid components that are the cause of the noise production by the landing gear 21 in the deployed position of the landing gear 21 during the take-off and landing stages of the aeroplane 20.

Figure 7 illustrates the manner in which the air screen 26 deflects air in the path of the landing gear 21 both in lateral direction, as indicated by the arrows 33a, 33b, and past the bottom side of the landing gear 21, as indicated by the arrow 34. In this way air is prevented from hitting the landing gear 21, or more specifically, the various components thereof, at high speed, which might lead to an increased noise production.

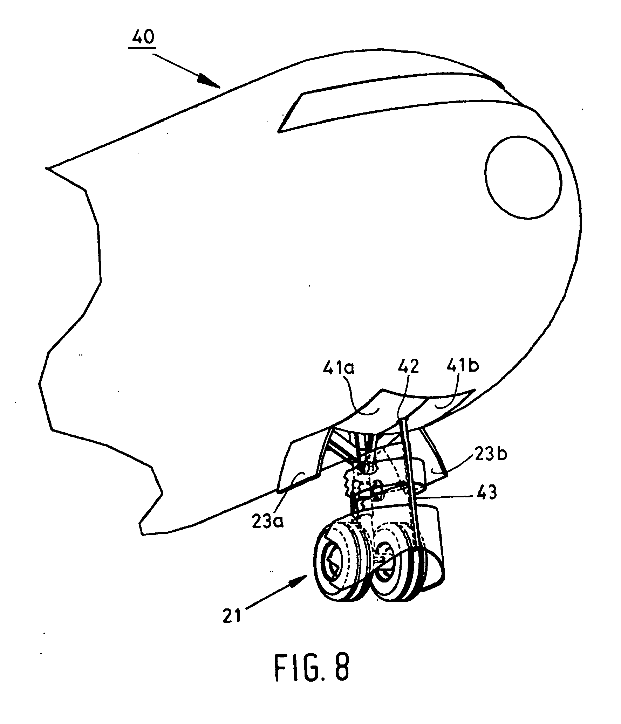

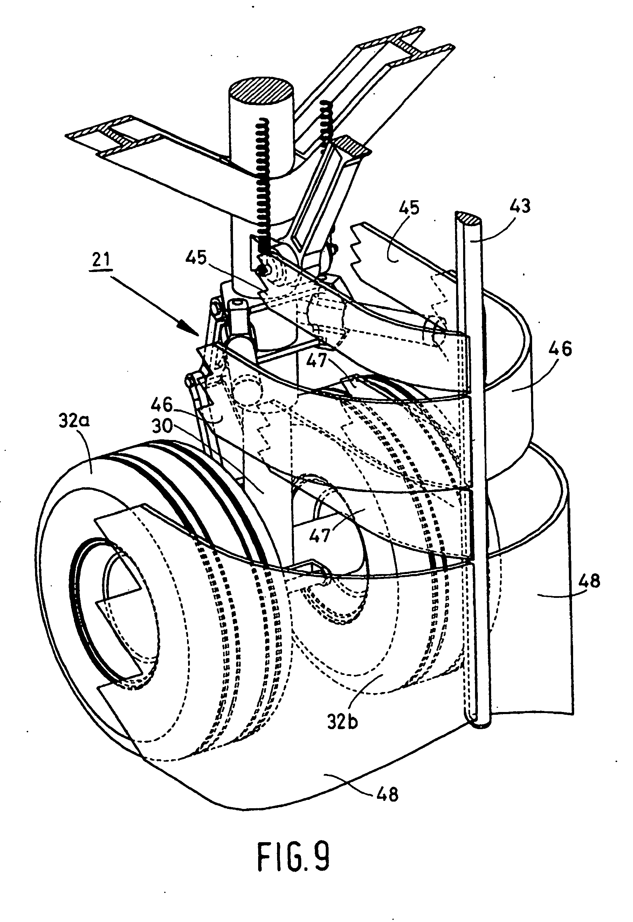

Whereas the aspect according to Figures 4-7 was similar to the aspect according to Figure 1, the aspect according to Figures 8 and 9 is similar to the aspect according to Figure 2. Within the framework of the invention, this fifth aspect constitutes an alternative for the fourth aspect according to Figures 4-7, in which connection it is noted that like parts are indicated by the same numerals.

The aeroplane 40 is provided with a nose landing gear 21 which, in the retracted position thereof, is stowed in the fuselage of the aeroplane, above the front wheel bay doors 41a, 41b and the rear wheel bay doors 23a, 23b. In the deployed position of the landing gear 21, in which the front wheel bay doors 41a, 41b are closed again, a blowing rod 43 extends through a common opening 42 of the front wheel bay doors 41a, 41b (see also Figure 9). Seen in horizontal cross-sectional view, the blowing rod 43 substantially takes the shape of a streamlined triangle having rounded corners, which faces in the direction of the landing gear 21.

Four blowing nozzles are present in each of the sides 44a, 44b that are directed slightly towards the landing gear 21, which blowing nozzles are regularly distributed over the length of the blowing rod 43 and which are connected to a compressor (not shown) present in the fuselage of the aeroplane 40 via the hollow interior of the blowing rod 43. The shape, the dimensions and the direction of the various blowing slots is such that various C-shaped, U-shaped or V-shaped air screens 45, 46, 47, 48 can be created at four vertical levels, with the blowing rod 43 being positioned in the centre of the shape in question.

The shapes of the air screens 45, 46, 47, 48 have been selected such that the various components of the landing gear 21 are fully enclosed by the joint air screens, as a result of which air present in the path of the landing gear 21 is prevented from hitting the landing gear 21 at a high velocity, which might lead to a higher noise level. To illustrate this, reference is made to the shape of the air screen 48 at the bottom side of the blowing rod 43, which shape has been selected such that said air screen 48 deflects past the wheels 32a, 32b on the outer side. The air screen 47 is much narrower in shape, however, since it only functions to screen the inner cylinder 30.

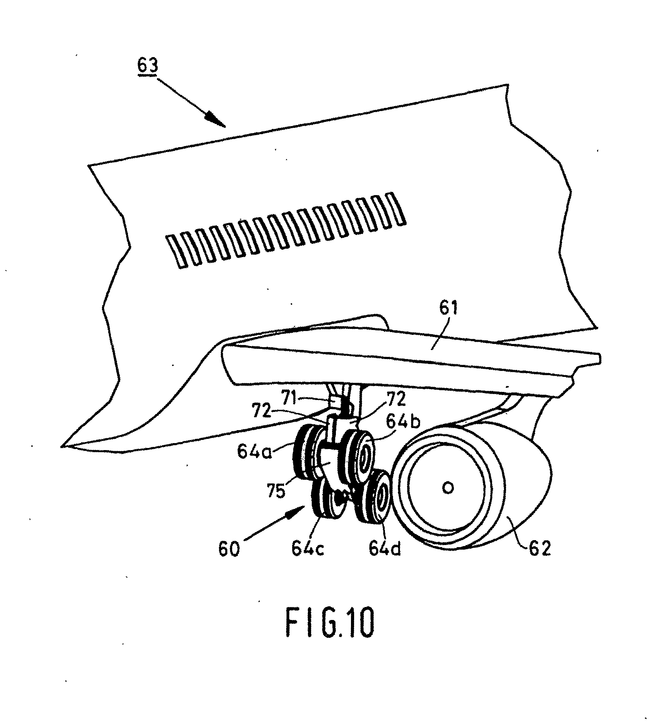

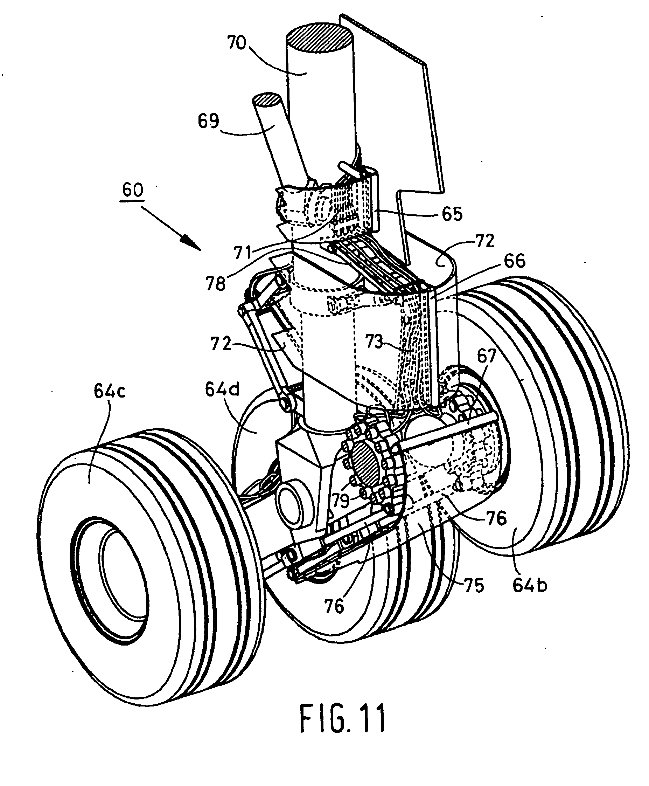

As will be explained with reference to Figures 10 and 11, the invention is also quite suitable for use with a main landing gear, such as the landing gear 60 which, in the deployed position thereof as illustrated in Figure 10, is positioned under the wing 61 carrying the jet engine 62 of the aeroplane 63. The landing gear 60 comprises four wheels 64a, 64b, 64c, 64d, of which the wheel 64a is not shown in Figure 11 for the sake of clarity of said Figure 11. Figure 11 clearly shows how three elongated blowing elements are connected to the main landing gear 60, viz. the vertically oriented blowing elements 65, 66 and the horizontally oriented blowing element 67. The blowing elements are not intended for jointly creating air screens that enclose the entire main landing gear 60, but only part thereof. More specifically, the wheels 64a, 64b, 64c, 64d, for example, are not screened by the air screens emanating from the blowing elements 65, 66, 67. The blowing element 65 has a blowing slot on one side, from which the air screen 608 emanates, which air screen on the one hand encloses the area where the strut 69 engages the outer cylinder 70. In this area relatively narrow air passages occur, which may add to the noise level. On the other hand, the air screen 68 also encloses part of vertically extending pipes and lines 71, for example cables and hydraulic lines. The U-shaped (in mirror symmetry) air screen 72 that emanates from the blowing element 66 likewise screens vertically extending pipes and lines, namely the portion 73 thereof, as well as a connecting mechanism 78, also indicated by the technical term articulation link. Furthermore, the air screen 72 forms a screen for the area surrounding the transition from the inner cylinder 74 to the outer cylinder 70.

Finally, an air screen 75 is created by means of the blowing elements 67 for the purpose of screening a lower portion of the landing gear 60, more specifically the torsion bars 76 and the brake cylinders, which are arranged in a circle.

Another important difference with the fourth and the fifth aspect as described with reference to Figures 4-9 is the fact that the blowing elements 65, 66, 67 are directly connected to the landing gear 60 and will be retracted along with said landing gear, for example. This makes heavy demands on the space to be occupied by said blowing elements 65, 66, 67, of course, in which connection it is noted that the dimensions of said blowing elements 65, 66, 67 are small in comparison to the area within which they function in the operative condition.

In the preferred embodiments that have been described so far, use is made of a compressor (not shown) disposed inside the aeroplane, by means of which a pressure can be built up within the blowing element in question, which pressure is sufficiently high for creating an air screen from the blowing openings in the blowing elements that offers sufficient resistance for deflecting air in the path of the landing gear away from (parts of) the landing gear. Instead of using a compressor, it is also possible within the framework of the invention, however, to use deflecting elements by means of which air in the path of the landing gear can be deflected so as to function as an air screen, or to use such deflecting elements in combination with such a compressor.

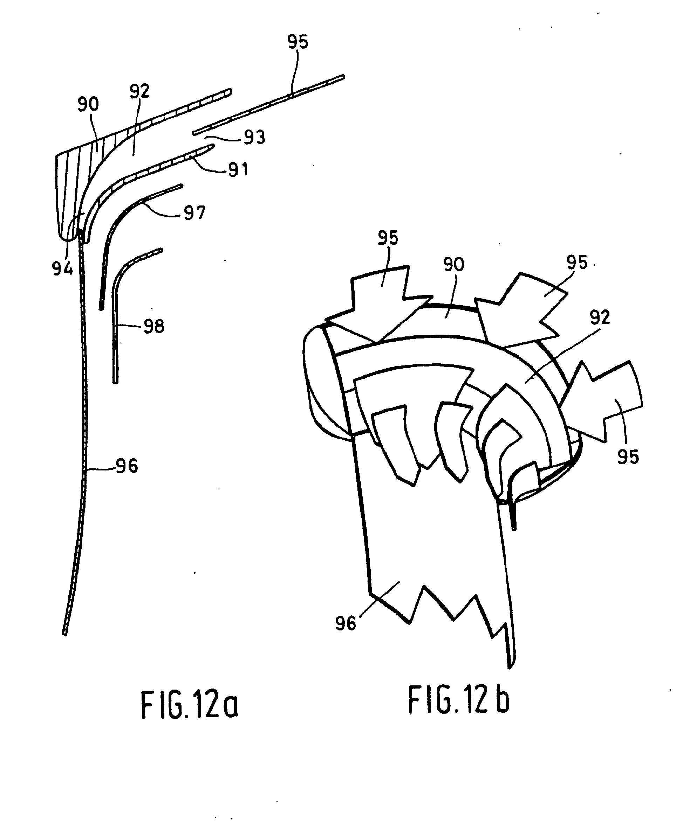

Figures 12a and 12b illustrate this more or less schematically. Two curved deflection sections 90, 91 can be distinguished, which deflecting sections are present at the front side of the landing gear in question. Present between the two deflecting sections 90, 91 is a converging space 92 extending from a substantially horizontally oriented inflow opening 93 to a vertically oriented outflow opening 94. The velocity of the air 95 that flows into the converging space 92 through the inflow opening 93 is further increased as a result of the converging shape of the space 92, after which is said air flows out of the outflow opening as an air screen 96 for screening components of a landing gear (not shown) present behind the air screen 96.

Also air that passes directly below the deflection sections 91 will be deflected, as is indicated at 97. Consequently, air that is not present in the path of movement of one of the two deflecting sections 90, 91 will nevertheless be deflected, as indicated at 98, because of the presence of the air screen 96 in combination with the deflected air 97.

Although a situation in which an air screen is created exclusively by deflecting an incoming air flow has been described with reference to Figures 12a and 12b, it is also possible within the framework of the invention to combine the creation of an air screen in this manner with the use of a compressor so as to generate an elevated pressure within a pressure element, as a result of which air can flow from a blowing wall of the blowing element in question at a high velocity.

## Claims

1. An aeroplane having a landing gear (i) provided with noise-reducing means for reducing the noise level that is produced during a flight, in particular, due to the presence of the landing gear (1) of the aeroplane, said noise reducing means comprising deflection means for deflecting an air flow away from said landing gear or at least from components thereof during the landing stage of the aeroplane, **characterized in that** the deflection means comprise blowing means (4,5) comprising a blowing element having at least one blowing nozzle (5) for creating an air screen (7) at the front side of the landing gear (1), or at least of components thereof, from said at least one blowing nozzle (5).

2. An aeroplane according to claim 1, **characterized in that** said at least one blowing nozzle (5) is elongated in shape.

3. An aeroplane according to claim 2, **characterized in that** said at least one blowing nozzle (5) is horizontally oriented, facing in downward direction.

4. An aeroplane according to claim 1 or 2, **characterized in that** said at least one blowing nozzle (9,10) is vertically oriented, facing in lateral direction.

5. An aeroplane according to claim 4, **characterized in that** the blowing element comprises two blowing nozzles (13,14) being vertically oriented in mirror symmetry.

6. An aeroplane according to any one of the preceding claims, **characterized in that** the blowing element (43) can be moved into a wheel bay of the aeroplane together with the landing gear (21).

7. An aeroplane according to claim 3, **characterized in that** the blowing nozzle (24a,24b) is attached to the underside of the fuselage of the aeroplane.

8. An aeroplane according to claim 3, **characterized in that** the blowing nozzle (24a,24b) is mounted in the wall of the fuselage at the bottom side of the aeroplane.

9. An aeroplane according to any one of the preceding claims, **characterized in that** said blowing means (4,5) are arranged for screening the landing gear (1) in its entirety.

10. An aeroplane according to any one of the preceding claims, **characterized in that** the blowing means (4,5) comprise a compressor that is connected to the blowing element (5).

11. An aeroplane according to any one of the preceding claims, **characterized in that** the blowing means (4,5) comprise deflection means for deflecting air in the path of the landing gear (1).

12. A landing gear for use with an aeroplane according to any one of the preceding claims, **characterized by** blowing means (4,5) comprising a blowing element having at least one blowing nozzle for creating an air screen at the front side of the landing gear (1) from said at least one blowing nozzle (5).

## Patentansprüche

1. Flugzeug mit einem Fahrwerk (1), wobei das Flugzeug mit Geräuschreduzierungsmitteln versehen ist, um den Geräuschpegel zu reduzieren, der während eines Fluges insbesondere aufgrund des Vorhandenseins des Fahrwerks (1) des Flugzeugs erzeugt wird, wobei die Geräuschreduzierungsmittel Ablenkmittel umfassen, um während der Landephase des Flugzeugs einen Luftstrom von dem Fahrwerk oder wenigstens von Komponenten hiervon abzulenken, **dadurch gekennzeichnet, dass** die Ablenkmittel Blasmittel (4, 5) umfassen, die ein Blaselement aufweisen, das wenigstens eine Blasdüse (5) besitzt, um an der Vorderseite des Fahrwerks (1) oder wenigstens an Komponenten hiervon einen Luftschirm (7) von der wenigstens einen Blasdüse (5) zu erzeugen.

2. Flugzeug nach Anspruch 1, **dadurch gekennzeichnet, dass** die wenigstens eine Blasdüse (5) eine lang gestreckte Form hat.

3. Flugzeug nach Anspruch 2, **dadurch gekennzeichnet, dass** die wenigstens eine Blasdüse (5) horizontal orientiert ist und in Abwärtsrichtung weist.

4. Flugzeug nach Anspruch 1 oder 2, **dadurch gekennzeichnet, dass** die wenigstens eine Blasdüse (9, 10) vertikal orientiert ist und in seitlicher Richtung weist.

5. Flugzeug nach Anspruch 4, **dadurch gekennzeichnet, dass** das Blaselement zwei Blasdüsen (13, 14) umfasst, die spiegelsymmetrisch vertikal orientiert sind.

6. Flugzeug nach einem der vorhergehenden Ansprüche, **dadurch gekennzeichnet, dass** das Blaselement (43) zusammen mit dem Fahrwerk (21) in einen Radraum des Flugzeugs bewegt werden kann.

7. Flugzeug nach Anspruch 3, **dadurch gekennzeichnet, dass** die Blasdüse (24a, 24b) an der Unterseite des Rumpfes des Flugzeugs befestigt ist.

8. Flugzeug nach Anspruch 3, **dadurch gekennzeichnet, dass** die Blasdüse (24a, 24b) in der Wand des Rumpfes an der Unterseite des Flugzeugs angebracht ist.

9. Flugzeug nach einem der vorhergehenden Ansprüche, **dadurch gekennzeichnet, dass** die Blasmittel (4, 5) so beschaffen sind, dass sie das Fahrwerk (1) als Ganzes abschirmen.

10. Flugzeug nach einem der vorhergehenden Ansprüche, **dadurch gekennzeichnet, dass** die Blasmittel (4, 5) einen Kompressor umfassen, der mit dem Blaselement (5) verbunden ist.

11. Flugzeug nach einem der vorhergehenden Ansprüche, **dadurch gekennzeichnet, dass** die Blasmittel (4, 5) Ablenkmittel umfassen, um Luft in den Weg des Fahrwerks (1) abzulenken.

12. Fahrwerk für die Verwendung bei einem Flugzeug nach einem der vorhergehenden Ansprüche, **gekennzeichnet durch** Blasmittel (4, 5) die ein Blaselement umfassen, das wenigstens eine Blasdüse besitzt, um an der Vorderseite des Fahrwerks (1) von der wenigstens einen Blasdüse (5) einen Luftschirm zu erzeugen.

## Revendications

1. Avion ayant un train d'atterrissage (1) avec des moyens de réduction de bruit destinés à réduire le niveau de bruit qui est produit au cours d'un vol, en particulier à cause de la présence du train d'atterrissage (1) de l'avion, lesdits moyens de réduction de bruit comprenant des moyens de déviation pour dévier un flux d'air en éloignement dudit train d'atterrissage ou au moins de certains composants de celui-ci au cours de l'atterrissage de l'avion, **caractérisé en ce que** les moyens de déviation comprennent des moyens de soufflage (4, 5) comprenant un élément de soufflage ayant au moins une buse de soufflage (5) pour créer un écran d'air (7) au niveau du côté avant du train d'atterrissage (1) ou au moins de certains composants de celui-ci, à partir de ladite au moins une buse de soufflage (5).

2. Avion selon la revendication 1, **caractérisé en ce que** ladite au moins une buse de soufflage (5) a une forme élongée.

3. Avion selon la revendication 2, **caractérisé en ce que** ladite au moins une buse de soufflage (5) est orientée de manière horizontale, se présentant de face suivant la direction vers le bas.

4. Avion selon la revendication 1 ou la revendication 2, **caractérisé en ce que** ladite au moins une buse de soufflage (9, 10) est orientée de manière verticale, se présentant de face suivant la direction latérale.

5. Avion selon la revendication 4, **caractérisé en ce que** l'élément de soufflage comprend deux buses de soufflage (13, 14) orientées verticalement dans une symétrie en miroir.

6. Avion selon l'une quelconque des revendications précédentes, **caractérisé en ce que** l'élément de soufflage (43) peut être déplacé dans un puits de roues de l'avion, conjointement avec le train d'atterrissage (21).

7. Avion selon la revendication 3, **caractérisé en ce que** la buse de soufflage (24a, 24b) est attachée à la partie du dessous du fuselage de l'avion.

8. Avion selon la revendication 3, **caractérisé en ce que** la buse de soufflage (24a, 24b) est montée sur la paroi du fuselage au niveau du côté inférieur de l'avion.

9. Avion selon l'une quelconque des revendications précédentes, **caractérisé en ce que** lesdits moyens de soufflage (4,5) sont agencés de façon à faire écran au train d'atterrissage (1) dans sa totalité.

10. Avion selon l'une quelconque des revendications précédentes, **caractérisé en ce que** les moyens de soufflage (4, 5) comprennent un compresseur qui est relié à l'élément de soufflage (5).

11. Avion selon l'une quelconque des revendications précédentes, **caractérisé en ce que** les moyens de soufflage (4, 5) comprennent des moyens de déviation pour dévier de l'air dans le chemin du train d'atterrissage (1).

12. Train d'atterrissage destiné à être utilisé dans un avion selon l'une quelconque des revendications précédentes, **caractérisé par** des moyens de soufflage (4, 5) comprenant un élément de soufflage ayant au moins une buse de soufflage pour créer un écran d'air au niveau du côté avant du train de transmission (1) à partir de ladite au moins une buse de soufflage (5).
